# EUROPEAN PATENT APPLICATION

(11) **EP 3 708 278 A1**
(43) Date of publication of application: **16.09.2020**
(21) Application number: 19162940.1
(22) Date of filing: 14.03.2019
(51) Int. Cl.: B22F 3/105, B33Y 10/00, B33Y 30/00, B29C 64/153

(54) **ADDITIVE MANUFACTURE**

(71) Applicant: Renishaw PLC, Wotton-under-Edge, Gloucestershire GL12 8JR (GB)
(72) Inventor: The designation of the inventor has not yet been filed
(74) Representative: Matthews, Paul

(57) **Abstract**

This invention concerns a method of powder bed fusion additive manufacture comprising forming a component in a powder bed in a layer-by-layer process. The method may comprise sintering, without melting, selected regions of powder with an energy beam to form at least one support adjacent to the component; and melting further selected regions of the powder bed with an energy beam to form a component by layer-by-layer melting of material. The method may comprise directing an energy beam at selected regions of powder to form a friable support, the friable support comprising bonded powder which act as a solid and provide compressive support; and melting further regions of the powder bed with an energy beam to form a component by layer-by-layer melting of material.

## Description

### Field of Invention

The present invention relates to powder bed fusion additive manufacture.

### Background

Additive manufacturing methods (which in some cases may be referred to as "3D printing") typically form three-dimensional articles by building up material in a layer-by-layer manner. Additive manufacture has several benefits over traditional manufacturing techniques, for example: additive manufacture has very few limitations on component geometry; additive manufacturing may reduce material waste (as even complex geometries can be produced at or near to their final net-shape); and additive manufacture does not require dedicated tooling so can enable flexible manufacture of small batches or individually tailored products.

One specific type of additive manufacture is powder bed fusion, which is particularly applicable to high strength materials such as metal alloys. In powder bed fusion a thin layer of powder is provided on a base and is selectively exposed to an energy source (for example a laser or electron beam) to fuse sections of the layer. A further layer of powder is provided over the solidified layer, generally by lowering a platform supporting the powder, and the subsequent layer is selectively fused. This fuses the powder both within the new layer and to the fused regions of the previous layer. The process is repeated to build the full component on a layer-by-layer basis.

Whilst "laser sintering" is often used as a generic term for metallic powder bed manufacturing, those skilled in the art will be aware that there is an important technical distinction between methods which fully melt metallic powder and methods which sinter metal powder. Some powder bed fusion methods only partially melt or sinter the powder during the layer-by-layer additive manufacture process. In such cases the 3-dimensional part produced may require further post processing to fully fuse into a final part. In contrast, other methods have been developed in which the powder is not merely fused together but is liquefied to melt the powder grains into a homogeneous part during the layer-by-layer additive manufacture process. Such full-melt processes include processes referred to as "Direct Laser Melting" or "Selective Laser Melting" and "Electron Beam Melting".

In addition to reducing post-processing, full-melt processes provide advantages in producing stronger parts with reduced porosity and better crystal structure. However, one disadvantage of full-melt processes is that residual stresses are produced in the final component. These residual stresses are the result of the thermal expansion and contraction of the metal during melting and subsequent cooling in the additive layer process. Such residual stresses may be such that the final part will distort or crack. As additive manufacture is used with higher strength materials (such as so called "super alloys") the residual stresses in the material from the manufacturing process may become greater.

In order to address residual stress issues, it is known to form components on a supporting substrate, as shown for example in US Patent US 5753274. A support structure is provided between the components and the substrate. The support structure may for example comprise a lattice or honeycomb structure such as the supports shown in US Patent US 5595703. Whilst some components may require some support due to part geometry (for example to prevent overhangs from sinking during formation) the primary requirement of the support structure is generally to address the substantial residual stresses. During the preparation of the component design for additive manufacture a support structure is included which serves to rigidly anchor the component to the substrate. This support structure is then built on a layer-by layer basis along with the component such that the three-dimensional features of the component are fully anchored to the substrate throughout the additive manufacturing process. The substrate may be a relatively large block of the same metallic material as the powder.

Not only do support structures add additional design and manufacture steps when producing additive manufactured components, they also require additional post processing. Once the component has been manufactured through the additive manufacture process it will initially remain anchored firmly to the substrate. A stress relieving process may be applied to the component to reduce or remove the residual stress in the final component. After such processing, it is safe to remove the component from the substrate without the risk of the component distorting or cracking. Removal of the component from the substrate requires the support structure to be cut away and entirely removed from the component to provide the final component geometry. The removal of supports is time consuming and can typically be a manual operation which adds cost and skilled labour to the component manufacture. Further, when a component is being manufactured to very strict geometrical tolerances the removal of supports can cause difficulty and effect the final surface finish of the component, for example burrs or blemishes may need addressing where supports were attached to the component.

Whilst commercially available powder bed additive manufacturing is highly effective there is a desire to provide improved methods and apparatus which can reduce or remove the need for a conventional support structure. Reduction or removal of support structure, or reduction or removal of the post processing, may reduce material usage and/or process time. Embodiments of the present invention may provide an improved additive manufacture process which addresses one or more of these problems.

### Summary of Invention

According to a first aspect of the invention, there is provided a method of powder bed fusion additive manufacture comprising forming a component in a powder bed in a layer-by-layer process wherein the method comprises:
sintering, without melting, selected regions of powder with an energy beam to form at least one support adjacent to the component; and
melting further selected regions of the powder bed with an energy beam to form a component by layer-by-layer melting of material.

The layer-by-layer melting and layer-by-layer sintering in accordance with embodiments are carried out in a single layer-by-layer process. The selective melting and selective sintering may be carried out concurrently (although it will be appreciated that there may be some layers in the process in which only melting, or only partial sintering, occurs due to the geometry of the particular component and/or support). For example in some embodiments only a full layer of sintered material may be provided (for example to provide a non-melted boundary).

According to another aspect of the invention, there is provided a method of powder bed fusion additive manufacture comprising the steps of:
a) providing a powder bed on a substrate;
b) heating the powder bed;
c) selectively forming at least one sintered support region of powder above the substrate by selectively scanning the powder bed;
d) selectively forming a component by selectively melting powder above the semi-sintered region;
wherein step (d), and optionally step (c) are repeated on a layer-by-layer basis.

It will be appreciated that steps (c) and (d) may be carried out concurrently in at least some layers of the powder bed. For example, at least some layers may include portions of the component and portions of the support regions upon which a subsequent layer of the component may be formed.

According to a further aspect of the invention, there is provided a method of powder bed fusion additive manufacture comprising forming a component in a powder bed in a layer-by-layer process wherein the method comprises:
directing an energy beam at selected regions of powder to form a friable support, the friable support comprising bonded powder which acts as a solid to provide compressive support; and
melting further regions of the powder bed with an energy beam to form a component by layer-by-layer melting of material.

"Sintered" as used herein is to be broadly interpreted. The skilled person will understand that sintering generally refers to a process in which material (under heat or pressure) is transformed into a solid mass without melting to the point of liquefaction. In other words, sintering is a solid phase solidification transition rather than a liquid phase transition as in the melting steps of the process. In the context of the invention, sintering could include some melting of the powder provided this is not sufficient to fully melt the powder as required in component formation. For example, if an outer layer of powder particles melted sufficiently to cause the particles to bond to one another but the inner portions of the particles remained solid this would be considered to be sintered. The skilled person would appreciate that such "partial melting" could not be considered melting for the purpose of the component manufacture since the inner portion of the powder particles would not melt so could not form a homogenous or fully dense solid.

In embodiments of the invention the sintered support may be partially sintered (or "semi-sintered"). A partially sintered support may be advantageous due to its friability. Whilst "Full sintering" may not be precisely defined the skilled person may typically understand that this implies that a powder is substantially fully dense after the sintering, for example having a density of greater than 99%.

A sintered region in accordance with embodiments of the invention may comprise powder which is sufficiently bonded to provide support during the layer-by-layer process. For example, the powder may be sufficiently bonded that it will act as a solid support rather than as a flowable powder during the process. However the sintering (particularly partial sintering) should be moderate enough that the component and support are easily removable at the end of the process. Thus, the supports of embodiments of the invention may be friable. The supports are configured to provide compressive support to the component during the process. In contrast to prior art supports (i.e. formed by melting in the same manner as the component) the supports of embodiments of the invention may not be intended to provide have significant tensile strength.

The use of friable, sintered, supports in accordance with embodiments of the invention may reduce the processing required on the final component. Further, the design freedom in positioning of supports may be improved. For example, a friable support may be able to be placed internally to a component in a position in which a conventional support could not be used due to the need for direct processing for removal. For example a friable internal support could be removed by a mechanical process which was applied via the exterior of the component.

The method may further comprise bulk heating the powder bed during the layer-by-layer process. Typically, such heating may commence prior to the layer-by-layer process (to allow the powder bed and/or process chamber to reach the desired temperature). The heating may continue throughout the process. Bulk heating may be provided by one or more heat sources within the process chamber. Heaters may be provided adjacent to the powder bed, for example in the platform or the walls of the chamber. Alternatively or additionally, radiant heat sources may be provided. As the powder is relatively thermally insulating, it may be necessary to monitor and model the temperature distribution in the powder bed with a system controller. The heater size will depend upon the scale of the powder bed, for example a 2kW heater may be provided.

For example, the powder bed may be heated to between approximately 400 and 700 °C, for example to 500 °C. Such a temperature may be ideal for a metallic powder such as Titanium 6AL4V. For some materials a higher temperature may be desirable. The target temperature may be selected for a given powder material based upon the stress relieving temperature range for that material. Such temperatures are available from literature for each material and the skilled person will appreciate that they may be derived from the solvus temperatures. Accordingly, the bulk heating may comprise monitoring and/or modelling the temperature of the powder bed to maintain the powder bed at a temperature within the stress relieving temperature range of the powder material.

The applicants believe, without being bound by any specific theory, that heating the powder bed prior to and during the additive manufacture process reduces the residual stresses formed during the additive fusion process by reducing temperature differentials in the component during formation. Thus, the need for supports which act as tensile anchors between the base/substrate and the component may be removed. The temperature of the bulk heating is selected such that the powder bed will not be sintered other than on a selective basis in accordance with an embodiment. This avoids the powder becoming bound together and interfere with the layer-by-layer process - for example interfering with proper flow of the powder, such as during refill of the powder bed for each successive layer.

The method is best carried out in a low oxygen environment. In particular alloys such as Titanium 6AL4V may be at risk of oxidation or oxygen infusion. As such, if the powder bed is bulk heated during processing the removal of oxygen from the environment may be of increased importance. Accordingly, the method in embodiments may further comprises providing a build chamber containing the powder bed, the chamber being provided with a low oxygen atmosphere during the layer-by-layer process. The low oxygen atmosphere may be provided by filling the chamber with inert gas. For example, the method may further comprise applying a vacuum to the chamber to evacuating air. Subsequently inert gas may be supplied to the chamber prior to commencing the layer-by-layer process. The inert gas may for example be argon or nitrogen. Purging air from the chamber prior to supplying inert gas may remove both oxygen and humidity from the chamber.

The selectively melting of powder may use an energy beam having a first power. The selective sintering, without melting, may use an energy beam having a second, reduced, power. The energy beams could be provided by dedicated sources. Alternatively, a convenient arrangement may be to use a single, variable output, source to provide both energy beams. For example a variable output laser is used to provide both the first power and second power energy beams.

When using a selective laser melting system (i.e. when the energy beam is a laser), the typical power for fusing powder by full melting may, for example, be -200W or more (for example some existing commercially available systems use one or more 500W lasers). Thus, the first power may be 200W (and the first energy beam may be a 200W laser beam). The second, reduced, power may be between approximately 140 to 180 Watts (more specifically, for example, between 150 to 175 Watts). Thus, the second, reduced, power energy beam may be between 0.7 to 0.9 times normal power output.

It may be appreciated that process parameters such as the speed of laser scanning and scan spacing may be varied depending upon the available power of the energy beam (and other factors such as the particular material). As such, the energy density, or fluence, (i.e. the radiant energy per surface area) of the beam may be a more useful parameter in additive manufacturing than power of the beam. Those skilled in the art may appreciate that fluence in an additive manufacturing process may be considered in terms of either the energy at the surface of the powder bed, i.e. "two-dimensional" energy density. However, it is also known to consider fluence in terms of three-dimensional energy density particularly when considering a pulsed laser where the energy density per pulse might be considered. The two-dimensional energy density per surface area will be primarily used herein since the beam is generally sweeping across the surface of the powder bed. In embodiments of the invention selectively melting of powder may use an energy beam having a first two-dimensional energy density. The selective sintering, without melting, may use an energy beam having a second, reduced, two-dimensional energy density. In embodiments of the invention melting may use an energy beam with a fluence of at least 1 J/mm². For example, melting may be carried out with parameters providing a fluence between approximately 1 to 3.5 J/mm². In contrast, the sintering step of the process may use an energy beam with fluence of less than 0.75 J/mm² (and more particularly the fluence may be less than 0.25 J/mm²). The sintering may, for example, be carried out with laser parameters providing a fluence of between approximately 0.1 to 0.5 J/mm². These ranges may respectively correspond to a three-dimensional fluence of between 20 to 75 J/mm³ for melting (for example more than 25 J/mm³) and between 2 to 10 J/mm³ for sintering (for example less than 10 J/mm³). With a powder bed heated to approximately 500°C, a two-dimensional energy density of approximately 0.2 to 0.25 J/mm² (corresponding to a three-dimensional density of approximately 3.5 to 4 J/mm³) was found to provide the ideal sintered support consistency.

The support may comprise a region of at least partially sintered powder extending to a layer immediately beneath a downward facing portion or feature of the component. Thus, the support may act to provide a base upon which the lowermost portions or features are found. However, by providing a support formed of sintered powder the support may (in contrast to prior art supports which are fully fused) intentionally not provide a rigid anchor between the component and a base or substrate. Thus, the support may be considered a floating support for the component. Sintered regions may be provided below substantially all downward facing surfaces of the component. This may for example, prevent fused powder from sinking into the powder bed during the process. In particular, islands of sintered powder may be formed in the layers immediately below any overhang features of the component.

Since the supports of the invention are not anchoring the component to the substrate, in some embodiments the supports may extend only partially through the depth of the powder bed. Specifically, the supports in some embodiments may extend only partially through the powder bed between the component and the base or substrate. Thus, the process may also include providing at least one region of unfused powder between the substrate or base and the support. It is advantageous to reduce the portion of the powder bed (excluding the component) which is processed since any processing (including sintering) may result in oxidation and effect re-use of the powder (since even an inert chamber is never entirely oxygen and/or moisture free).

The applicants have also unexpectedly found that a further advantage of providing a sintered powder region adjacent to an external surface of the component may be the provision of an improved surface finish to the component. For example, without being bound by any particular theory, it appears that the sintered region reduces the adherence of loose powder to the component surfaces. Thus, in some embodiments the invention may further comprise forming sintered regions immediately adjacent to the external surfaces of the component (for example including surfaces which are not downwardly facing such as overhangs). For example, a sintered region may be provided immediately adjacent to all external surfaces of the component.

Further, a sintered region may improve thermal transfer during the cooling of the layers of the component. The thermal inertia of a component may be greatly influenced by the component geometry and areas of a component having significant variance in thermal inertia may result in differential cooling during the layer-by-layer process. This may cause, or increase the risk of, distortion or cracking. Accordingly, the method may further comprise identifying areas of the component having a significant differential in thermal inertia and providing a sintered region adjacent to said areas.

To optimize throughput and process efficiency it is known to build multiple components in a single additive process. For example, a typical additive manufacture apparatus (such as the applicants' Renishaw AM 400) may have a powder bed of 250mm by 250mm and may be used to manufacture over a hundred components such as dental components (including for example implants, crowns and bridges, prosthetics, chrome work and orthodontics). Embodiments of the present invention may be used to further enhance the part yield from a powder bed process. For example, methods in accordance with the invention may comprise forming a plurality of components in the powder bed, the components being separated by the sintered regions of powder. In particular, sintered regions may be stacked on top of a first component to enable a second component to be formed in subsequent layers. In other words, the sintered regions may provide vertical separation between a plurality of components. The sintered regions may provide sufficient support for the subsequent component but does not provide a fixed or anchored support structure between the components. Thus, embodiments of the invention may enable the full available three-dimensional space of the powder bed to be used in an optimal manner.

The skilled person may also appreciate that the methods of embodiments of the invention may provide further benefits in optimising a process. For example, by using embodiments of the invention to remove or reduce anchoring support structures (i.e. supports formed of fully fused powder) it may be possible to better utilise the available build space. For example, if overhang regions of a component require less support then there may be less requirement to build a component with its geometry close to the substrate or build plate. For example, this could enable a substantially plate like member having a non-planar profile to be manufactured generally perpendicular to the substrate or build plate (rather than substantially parallel). Thus, it may be possible to produce several additional parts in a single build. This could, for example, be useful in the formation of cranioplasty plates.

In preferred embodiments method of powder bed fusion additive manufacture is powder bed laser fusion additive manufacture. More particularly, the method is a metallic powder bed fusion additive manufacture method.

In preferred embodiments, the method may further comprise controlling the energy beam when melting selected regions of the powder by directing the beam to solidify a selected area of a layer of material by advancing the laser beam to melt spaced apart sections, wherein each melted section is allowed to solidify before an adjacent section is melted by irradiating the layer with the or another laser beam. Each section may be sized such that a melt pool extends across the entire section. In one embodiment, the laser beam may be advanced a plurality of times along a scan path, wherein on each pass along the scan path, the laser beam solidifies spaced apart sections of the scan path. Each subsequent pass may then solidify sections that are located between sections solidified on a previous pass. In a multi-laser apparatus, the method may comprise advancing multiple ones of the laser beams along a scan path, wherein on a pass of each one of the laser beams along the scan path, the laser beam melts spaced apart sections of the scan path and a pass of one of the laser beams along the scan path melts sections that are located between sections of the scan path melted by another of the laser beams. An example of such an intermittent spot scanning approach is disclosed in the Applicant's earlier Patent Application WO2016/079496, which is incorporated herein by reference, and has been found to reduce thermal stress during layer-by-layer manufacture. Thus, intermediate scanning may reduce/further reduce the need for conventional anchoring supports and be synergistic with embodiments of the invention using non-anchoring sintered supports. The sections may be scanned in a sequence such that each section solidifies with a cooling rate above a first cooling rate threshold. The first cooling rate threshold may be a cooling rate above which a specified microstructure, such as a planar and/or cellular microstructures is achieved (and reduces or eliminates equiaxed and/or columnar dendritic microstructures). An example of such a method is described in WO2018/029478, which is incorporated herein by reference. Use of such a method can reduce thermal stresses avoiding or reducing the need for anchor type supports.

According to a further aspect of the invention there is provided an additive manufacture apparatus comprising:
a powder bed in a process chamber;
a radiation source for providing an energy beam;
a scanner for directing the energy beam across the powder bed; and
a controller configured to control the apparatus in accordance with the method of powder bed fusion additive manufacture in accordance with embodiments of the invention.

The radiation source may be a laser.

The apparatus may further comprise a heater for bulk heating the powder bed.

The process chamber may further comprise a moveable platform for lowering the powder bed after a layer has been formed thereon. The apparatus may further comprise a supply for providing subsequent layers of powder to the powder bed.

The apparatus may further comprise a vacuum pump for removing oxygen from the process chamber. The apparatus may further comprise an inert gas supply for filling the process chamber.

It may be appreciated that embodiments of the invention may be implemented on an existing powder bed fusion apparatus. Accordingly, another aspect of the invention may comprise a data carrier having instructions stored thereon, wherein the instructions when executed by a process cause the processor to carry out the method in accordance with an embodiment of the invention.

Whilst the invention has been described above, it extends to any inventive combination of the features set out above or in the following description or drawings.

### Description of the Drawings

Embodiments of the invention may be performed in various ways, and embodiments thereof will now be described by way of example only, reference being made to the accompanying drawings, in which:
**Figure 1** is a schematic representation of a powder bed fusion apparatus;
**Figure 1b** is a schematic representation of a powder bed fusion apparatus showing a method according to an embodiment of the invention; and
**Figures 2a to 2c** are photographs showing test components and supports made in accordance with methods of an embodiment of the invention.

### Detail Description of Embodiments

It may be appreciated that references herein to vertical or horizontal are with reference to the axis of the additive manufacture process. In particular, as powder bed fusion is a layer by layer process the horizontal axis corresponds to the plane of the layers (which is in turn defined by the powder bed and support). The corresponding alignment of a component being manufactured is selected during optimisation of the process and is not therefore limited to any specific direction. Any other references to directions such as above/below or upward/downward are likewise non-limiting with respect to the component per se and should be understood to generally refer to orientation during the additive manufacturing process.

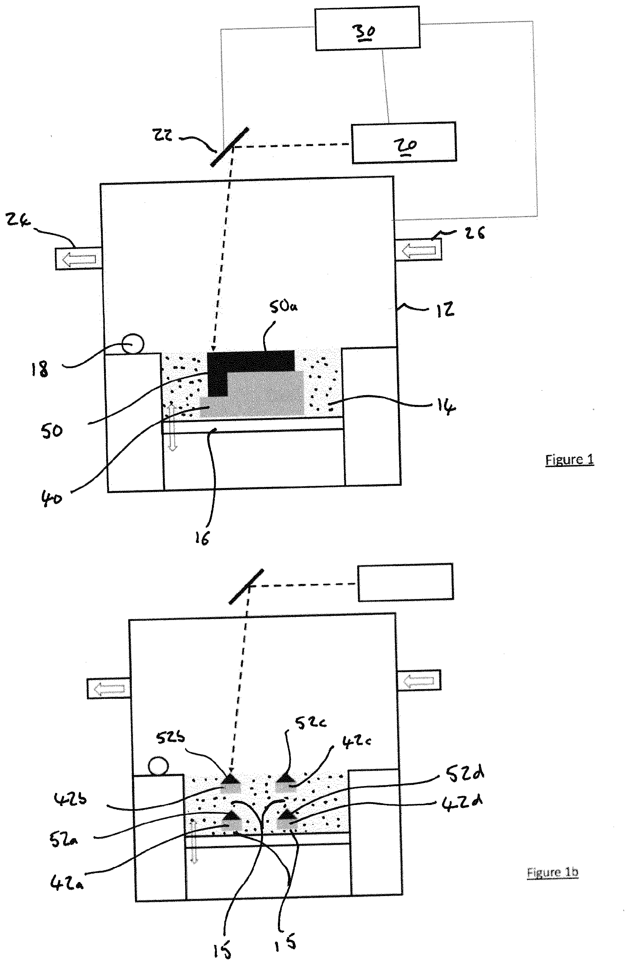

A metallic powder bed laser fusion additive manufacture apparatus 10 for use in embodiments of the present invention is shown in Figure 1a. The apparatus may for example be a commercially available apparatus (possibly with some modification to enable embodiments of the invention) such as the Applicant's commercially available "Renishaw AM" systems. The apparatus comprises a process chamber 12 which encloses a powder bed 14. The powder bed 14 is supported on a platform 16 which, as is known in the art may also support a substrate of the same metal as the powder. The platform 16 is moveable in the vertical axis such that it may be lowered as each successive layer of the additive manufacture process is carried out. A supply 18 for providing powder to the bed 14 after the platform 16 is lowered and may include a roller (as shown in the present example) or scraper/wiper which travels across the powder bed 14 in the horizontal axis for distributing an even layer on the powder bed. The skilled person may appreciate that when implementing embodiments of the invention the movement of the supply across the powder bed 14 may need to be adjusted or optimised to ensure than friable sintered supports (particularly floating supports) are not displaced or removed.

A radiation source 20, typically a laser (although some embodiments could, for example, use an electron beam emitter), is provided for heating and fusing the powder in the bed 14. The radiation source is directed to the powder bed by a scanner 22, typically comprising a moveable mirror arrangement. A controller 30 is provided for controlling the radiation source 20, the scanner 22 and the process chamber 12 (including for example the platform 16, supply 18 and environmental systems such as heating and gas supply). In use the scanner 22 is used to move the energy beam across the surface of the powder bed 14.

In accordance with preferred embodiments the process chamber 12 includes a heating arrangement (not shown) for raising the temperature of the powder bed 14 prior to and during the layer-by-layer process. Additionally, it is highly desirable to provide a low oxygen atmosphere within the process chamber 12. The process chamber 12 is, therefore, hermetically sealed (and as the source 20 and scanner 22 are typically external to the chamber, the chamber may include a window through which the laser beam may pass into the chamber). An outlet 24 is provided which is in communication with a vacuum pump to remove air from the chamber 22. An inlet 26 is also provided and may be connected to a supply of inert gas such as argon. Typically, the chamber 22 will be evacuated first by the outlet 24 to purge the chamber 22 before the inlet 26 is opened to draw inert gas into the chamber 12.

The skilled person in the art will be aware of the general operation of a powder bed fusion additive manufacture processes. A component 50 to be built is first prepared using a file preparation software, such as the applicants QuantAM software, to optimise the process and the component. The preparation stage requires the component geometry to be appropriately orientated and support structures added where required. Scan parameter may also be optimised, for example optimisation may include factors such as the layer thickness, beam size and dwell time of the beam. The component must then be divided into a series of slices (along the vertical axis of the additive manufacturing apparatus) and a scanning strategy for each slice prepared. The software then provides an output in the form of layer-by-layer computer instructions for the additive manufacture machine. It will be understood that the methods of the present invention would be implemented by incorporating them into the preparation software such that the layer-by-layer computer instructions.

The instructions from the preparation software are uploaded to the controller 30 so that the additive manufacture process can commence. An initial layer of powder is provided in the powder bed 14 supported by the platform 16 which will initially be in an upper position. The powder supply 18 may pass a roller or the like across the powder to ensure it is evenly filled and suitably compacted. The chamber is evacuated by the outlet 24 before being filled with inert gas by the inlet 26. The laser 20 is then used to selectively scan the powder bed 14 in a two-dimensional scan pattern to melt powder so that it will solidify and form a first layer of the component 50 on the platform. In a powder bed fusion process, it is essential that the scan parameters (for example laser power, spot size and scan speed) are selected to achieve a full melt of the powder in each part of the component. This ensures that a fully dense part is formed with a homogenous mass and low porosity.

After the first layer of the powder has been fully selectively scanned, the platform 16 is moved downward and a subsequent layer of powder is added to the powder bed 14 by the supply 18. The scanning for the subsequent layer is then carried out with melted regions fusing not only with adjacent parts of the new layer but also with those of the immediately underlying layer. This process is then repeated until sufficient layers have been stacked in the vertical direction to form the full geometry of the part 50.

As discussed above, in existing methods the first layer of powder may be fused to a substrate both to support any overhand features and to anchor the component against residual stresses formed by the heating and cooling of the additive process. The components will generally be removed from the process chamber with the substrate (which may need to be of considerable bulk) and post-processed to reduce or remove the residual stress and then subsequently to detach the component(s) from the substrate and to remove any support structures from the component. This post processing may add considerable time and cost to the overall process of forming the component and is therefore undesirable.

In accordance with embodiments of the invention, a modified additive manufacture process is used. The powder bed 14 (and process chamber 12) is heated to an elevated temperature, for example 500°C. It will be appreciated that this bulk heating of the powder bed must be sufficiently below the melting point of the material that it will not interfere with the normal additive manufacture process (for example preventing correct flow of the powder during re-supply). However, the applicants have found that heating to this degree at least reduces the residual stresses formed due to the thermal effects of the additive manufacture process. The methods of the invention may, therefore, take advantage of this reduction in residual stress to utilise a modified or reduced support structure. Whilst the specific support structure will depend upon the component being formed, ideally it would be desirable to form a component with little or no physical attachment to a substrate. In other words, it is an aim of embodiments of the invention to remove the need for anchoring the component to resist residual stress related issues such as cracking or deformation and to only include support for part accuracy such as preventing sinking of overhanging features.

In accordance with embodiments of the invention supports are formed by a region 40 of "semi-sintered" powder. Such regions are formed beneath layers of the component 50 and may extend fully to the base plate or substrate or may have a few layers of separation by un processed powder. Importantly, the semi-sintered supports are not fully melted. The semi-sintered supports may generally have insufficient bonding of the powder to perform an anchoring between the part 50 and base or substrate but may be sufficiently stiff to support the position of the part within the powder bed 14. In particular, the semi-sintered region 40 may provide support for overhang features 50a to prevent them from sinking into the powder bed during the layer by layer process (which would otherwise for example result in poor geometric accuracy). The semi-sintered region is at least partially sintered, which may be understood to mean that the powder in this region has been heated sufficiently to bond to surrounding powder but is not fully sintered since it has not formed a true solid under the application of pressure and heat. There may, for example be minimal change in the grain structure of the semi-sintered powder.. A semi-sintered region should be sufficiently bonded to provide support during the layer-by-layer process. For example, the powder should be sufficiently bonded from the semi-sintering that it will act as a solid support rather than as a flowable powder. However, the "sintering" should be moderate enough that the component 50 and support 40 are easily removable. For example, only moderate physical pressure may be required to separate the component 50 and support 40. Ideally, the support may be sufficiently friable that it can simply broken away or crumble by hand.

Figure 1(b) shows how embodiments of the invention may utilise "floating supports" 42 which do not extend through the full depth of the powder bed 14. Thus, each floating support 42a, 42b, 42c and 42d may be separated from the base by at least one layer of unfused powder 15. This layer of unfused powder 15 may further ensure ease of removal of the final components 52. A further advantage of the sintered supports of embodiments of the invention is that they may be utilised to increase usage of the full three-dimensional extent of the powder bed. Thus as shown in figure 1(b) components 52a and 52b or 52c and 52d may be "stacked" but separated by sintered regions 42 and/or unfused regions 15.

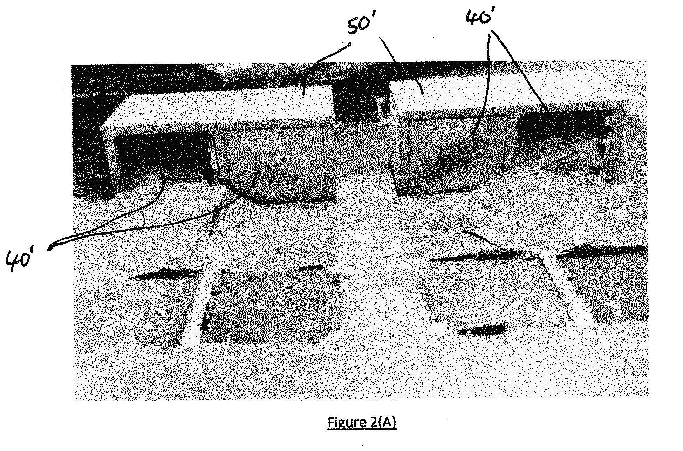

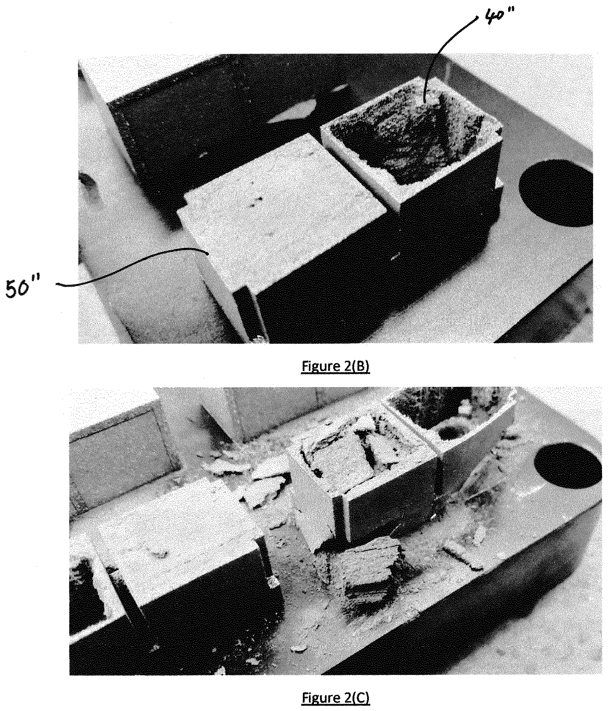

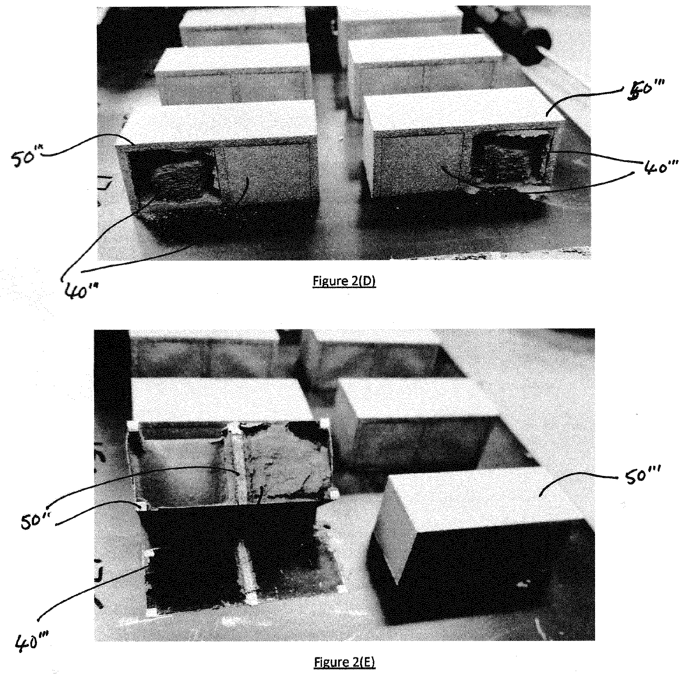

In order to verify embodiments invention, and provide an initial optimisation of the process, a simple test structure 50 in the form of an open-sided inverted box was built using a Renishaw AM laser powder bed fusion machine. Such a structure is a useful test structure due to having an unsupported overhanging span. Within the region enclosed by the span the powder was scanned, in accordance with embodiments of the invention, to provide a semi-sintered region 40. The results of the testing are shown in the photographs of figure 2 and represented in tables 1 and 2 below. By variation of process parameters, it is possible to empirically identify a "Goldilocks" zone for a particular material in which the support 50 is neither too soft (i.e. insufficiently semi-sintered) or too hard (i.e. over semi-sintered)

The test structures were formed using Titanium 6AL4V a common alloy for the use in laser powder bed melting additive manufacture. The build volume, with an inert atmosphere chamber was heated to 500°C. A series of test structures were then formed in a single additive manufacturing process (i.e., on a single substrate). All the semi-sintered support regions 40 were formed with the same laser beam exposure time, 40µlsecs and point distance 300µm. The laser output power was varied in steps between 100W and 200W and the focus offset and spot size were varied in different tests. The results are shown in tabular form in Table 1 and Table 2 below.

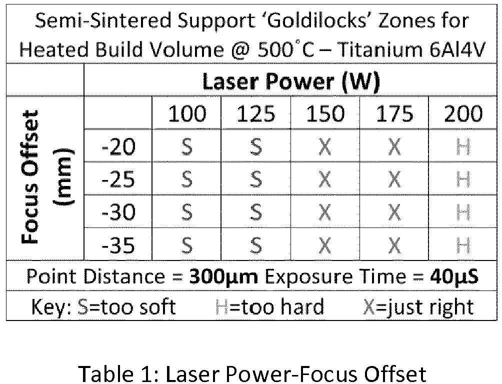

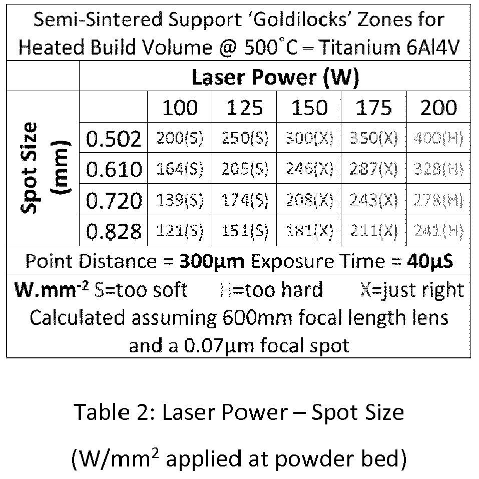

It may be immediately noted from the test case that the key parameter for providing a semi-sintered support was the laser power output. The ideal support consistency was found with the laser output at 150 to 175W. This corresponded to a two-dimensional energy density, or fluence, of approximately 0.2 to 0.25 J/mm².

As shown in Figure 2(A), when the laser output was too low (this example being 125W, corresponding to a two-dimensional energy density of less than 0.2 J/mm²) the semi-sintered powder 40' was insufficiently bonded to prevent it from flowing out of the cavity beneath the test structure 50'. Thus, these settings were not providing the required support function.

As shown in Figure 2(B) and 2(C), when the laser output was too high (this example being at 200W, corresponding to a two-dimensional energy density of more than 0.25 J/mm²) the bonding of the semi-sintered powder 40" was such that the support and the test structure 50" could not easily be removed. In fact, it was necessary to chip/chisel away powder with hand tools. Thus, these settings did not provide a support which removed the need for post processing or allowed a part to be immediately removed from the powder bed.

Figure 2(D) and 2(E) show the ideal semi-sintered consistency (this example being at 175W, corresponding to a two-dimensional energy density of approximately 0.25J/mm²). In this case the semi-sintered support 50'" is sufficiently bonded to provide support to the overhang portion of the test structure 40'" as it will not simply flow under loading. However, part removal is simple and does not require significant effort to remove the part and break away the semi-sintered region 50'''.

The applicants have also recognised some additional benefits which may be achieved or enhanced by using the process in accordance with embodiments of the invention. For example, the method may make more efficient use of material since the semi-sintered supports essentially comprise loose powder. As such, the powder from the support regions may be reused with little additional processing. For example, the powder may only require passing through a sieve or mesh to ensure it is ready to be re-used in a future powder bed process.

It has also been noted that the surface of test pieces adjacent to semi-sintered regions (for example the underside of overhangs on test structures) has an improved surface finish. This is believed to be a result of a reduction in un-melted powder bonding to the melted surface of the component. This advantage may be utilised to improve the finish of even component surfaces that do not require any support. Thus, the semi-sintered regions in accordance with the invention may additionally be formed adjacent to surfaces that are not requiring support. For example, a semi sintered region may be formed between parts of the component (in a single layer) or on the layer immediately above an exterior part of the component.

The semi-sintered regions may also alter the thermal properties of the powder bed. This may help to mitigate differences in thermal inertia of areas of the component. This may be a further factor in selecting regions of the powder bed to be semi-sintered. For example, it may be advantageous to provide additional semi-sintered powder regions around relatively fine component features to provide more thermal mass. Additionally, less semi-sintered powder may be provided around relatively bulky component features so that the difference in thermal inertia between such features and finer features is reduced.

Although the invention has been described above with reference to preferred embodiments, it will be appreciated that various changes or modification may be made without departing from the scope of the invention as defined in the appended claims. For example, the skilled person may appreciate that whilst the examples provided above use a semi-sintered support as an alternative to a fully fused support embodiments of the invention may in practice be used in combination with existing techniques to provide the optimum process for any given component. Thus, the skilled person may use a combination of techniques or strategies to build a particular geometry in order to provide the best combination of various factors such as geometric accuracy, build quality and process throughput. For example, in some geometries (for example a significant overhang) it may be desirable to build a first support portion having fully fused powder and dispose a semi-sintered region between the fully fused support and the surface of the component. This may provide sufficient support and thermal transfer but still provide the advantage of a "floating" construction in accordance with embodiments of the invention.

It will also be appreciated that embodiments of the invention may be used in combination with other methods of reducing residual stress. For example, methods of the invention may be used in combination with revised scan strategies such as those which perform a selective scan which melts powder in a non-raster scan sequence such that adjacent portions of the layer are not melted at the same time. Such methods may be incorporated alongside the teaching of the invention within the additive manufacture preparation software.

It may be appreciated that some commercially available machines, such as the applicants RenAM 500Q, may include multiple lasers to increase productivity. The RenAM 500Q for example includes four 500W lasers which are each able to access the whole powder bed surface simultaneously to ensure maximum flexibility in use. Thus, in some embodiments of the invention different energy sources may be used for the sintering and melting steps of the process. Whilst one or more lasers could be dedicated to the sintering process it may be preferable to have all laser suitable for preforming both melting and sintering such that the laser use and scan pattern can be optimised specifically for a particular component build.

## Claims

1. A method of powder bed fusion additive manufacture comprising forming a component in a powder bed in a layer-by-layer process wherein the method comprises:
sintering, without melting, selected regions of powder with an energy beam to form at least one support adjacent to the component; and
melting further selected regions of the powder bed with an energy beam to form a component by layer-by-layer melting of material.

2. The method of powder bed fusion additive manufacture of claim 1, wherein the support formed by sintering selected regions of the powder is friable.

3. A method of powder bed fusion additive manufacture comprising forming a component in a powder bed in a layer-by-layer process wherein the method comprises:
directing an energy beam at selected regions of powder to form a friable support, the friable support comprising bonded powder which act as a solid and provide compressive support; and
melting further regions of the powder bed with an energy beam to form a component by layer-by-layer melting of material.

4. The method of any preceding claim, wherein the support is partially sintered.

5. The method of powder bed fusion additive manufacture of any preceding claim, wherein the method further comprises bulk heating the powder bed during the layer-by-layer process, wherein the method may further comprise monitoring and/or modelling the temperature of the powder bed to maintain the powder bed at a temperature within the stress relieving temperature range of the powder material.

6. The method of powder bed fusion additive manufacture of any preceding claim, comprising controlling the energy beam when melting selected regions of the powder by directing the beam to solidify a selected area of a layer of material by advancing the laser beam to melt spaced apart sections, wherein each melted section is allowed to solidify before an adjacent section is melted by irradiating the layer with the or another laser beam, wherein each section may be sized such that a melt pool extends across the entire section.

7. The method of powder bed fusion additive manufacture of any preceding claim, wherein the selectively melting uses an energy beam having a first energy density and the selectively at least partially sintering, without melting, uses an energy beam having a second, reduced, energy density.

8. The method of powder bed fusion additive manufacture of claim 7, wherein the second, reduced, density is a two-dimensional energy density of less than 0.75 Joules/mm².

9. The method of powder bed fusion additive manufacture of any preceding claim, wherein the support comprises a region extending to a layer immediately beneath a downward facing portion of the component.

10. The method of powder bed fusion additive manufacture of any preceding claim, wherein the support is a floating support for the component.

11. The method of powder bed fusion additive manufacture of claim 10, wherein the process comprises providing at least one region of unfused powder between the substrate or base and the support.

12. The method of powder bed fusion additive manufacture of any preceding claim, wherein the partially sintered further regions of powder are formed immediately adjacent to external surfaces of the component.

13. The method of powder bed fusion additive manufacture of any preceding claim, wherein a plurality of components are formed in the powder bed, the components being separated by the partially sintered further regions of powder.

14. A method of powder bed fusion additive manufacture comprising the steps of:
a. providing a powder bed on a substrate;
b. heating the powder bed;
c. selectively forming at least one sintered support region of powder above the substrate by selectively scanning the powder bed;
d. selectively forming a component by selectively melting powder above the semi-sintered region;
wherein step (d), and optionally step (c), are repeated on a layer-by-layer basis.

15. An additive manufacture apparatus comprising:
a process chamber containing a powder bed;
a radiation source for providing an energy beam;
a scanner for directing the energy beam across the powder bed; and
a controller configured to control the apparatus in accordance with the method of powder bed fusion additive manufacture in accordance with any of claims 1 to 13.
